# FASCICULE DE BREVET EUROPEEN

(11) **EP 1 887 275 B1**
(45) Date de publication et mention de la délivrance du brevet: **18.11.2015**
(21) Numéro de dépôt: 07301268.4
(22) Date de dépôt: 24.07.2007
(51) Int. Cl.: F17C 11/00, C04B 28/18, C04B 38/00, B01J 20/10, B01J 20/28

(54) **STRUCTURE DE GARNISSAGE POUR RÉCIPIENT DE GAZ À MATÉRIAU CRISTALLISÉ SOUS FORME D'AIGUILLES**
PACKUNGSSTRUKTUR FÜR GASBEHÄLTER AUS NADELFÖRMIGEM, KRISTALLISIERTEM MATERIAL
PACKING STRUCTURE FOR GAS CONTAINER WITH NEEDLE-SHAPED CRYSTALLISED MATERIAL

(30) Priorité: 26.07.2006 FR 0653120
(43) Date de publication de la demande: 13.02.2008
(73) Titulaire: L'AIR LIQUIDE, Société Anonyme pour l'Etude et l'Exploitation des Procédés Georges Claude, 75007 Paris (FR)
(72) Inventeur: Baune, Emmanuel, 95660 Champagne sur Oise (FR); Del-Gallo, Pascal, 91410 Dourdan (FR); Chartier, Thierry, 87220, Feytiat (FR); Cannet, Gilles, 95620 Parmain (FR)
(74) Mandataire: Conan, Philippe Claude

(56) Documents cités:
- EP-A- 0 237 827
- EP-A- 0 264 550
- EP-A1- 1 886 982
- FR-A1- 2 876 687
- JP-A- 1 122 917
- JP-A- 2006 001 992
- US-A- 3 928 539
- US-A- 4 349 463
- DATABASE WPI Week 200024 Derwent Publications Ltd., London, GB; AN 2000-282937 XP002433616 & WO 00/12630 A1 (UBE IND LTD) 9 mars 2000 (2000-03-09)

## Description

La présente invention a pour objet de nouvelles structures de garnissage de récipients, les récipients les contenant, ainsi que leur utilisation pour stocker des fluides tels que des gaz.

Il est connu d'utiliser des récipients sous pression contenant des gaz, tels que de l'acétylène, dissous dans un solvant, tel que de l'acétone, dans différentes applications médicales et artisanales, et notamment pour réaliser des opérations de soudage, brasage et chauffage en combinaison avec une bouteille d'oxygène.

Ces récipients sont habituellement garnis de matériaux de remplissage solides, destinés à stabiliser les gaz qu'ils contiennent, lesquels sont thermodynamiquement instables sous l'effet de variations de pression ou de température et donc susceptibles de se décomposer lors de leur stockage, leur transport et/ou leur distribution.

Ces matériaux doivent avoir une porosité suffisante pour faciliter l'absorption et la libération des gaz contenus dans le récipient. Ils doivent également être incombustibles, inertes vis-à-vis de ces gaz et présenter une bonne résistance mécanique. Ces matériaux sont classiquement constitués de masses céramiques silico-calciques poreuses, obtenues par exemple à partir d'un mélange homogène dans l'eau de chaux vive ou de lait de chaux et de silice (notamment sous forme de farine de quartz), habituellement dans un rapport de 0,6 à 1,1, comme décrit dans les documents WO-A-93/16011, WO-A-98/29682, EP-A-262031, pour former une pâte qui est ensuite soumise à une synthèse hydrothermale. Précisément, la pâte est introduite dans le récipient à garnir, sous vide partiel, lequel est ensuite soumis à un autoclavage en pression et en température, puis à une cuisson dans un four pour éliminer complètement l'eau et former une masse solide monolithique de composition CaₓSi_{y}O_{z},_{w}H₂O présentant des structures cristallines de type tobermorite et xonotlite, avec une présence éventuelle résiduelle de quartz. Divers additifs peuvent être ajoutés à ces mélanges de l'art antérieur pour améliorer la dispersion de la chaux et de la silice et éviter ainsi la formation d'inhomogénéités structurales et les phénomènes de retrait observés lors du durcissement de la masse poreuse. Les matériaux de remplissage obtenus doivent en effet présenter une porosité homogène sans espaces vides dans lesquels des poches de gaz pourraient s'accumuler et entraîner des risques d'explosion.

Les masses poreuses silico-calciques de l'art antérieur présentent en général une taille de pores inférieure ou égale à 25 µm, allant par exemple de 0,05 à 25 µm, et une porosité d'au moins 85% et allant jusqu'à 93% en volume, de façon à faciliter le contact entre le gaz et le solvant et le remplissage comme la vidange du gaz contenu dans les récipients. Le document EP-264550 indique en outre qu'une masse poreuse contenant au moins 50%, voire au moins 65%, voire même au moins 75% en poids de phase cristalline (par rapport au poids de silicate de calcium) permet de satisfaire à la double exigence de résistance à la compression et au retrait aux températures de synthèse hydrothermale et de cuisson.

Le document US 4349463 décrit une structure de garnissage de récipient pour le stockage d' acétylène comprenant un matériau de structure cristalline xonotlite et/ou tobermorite et un procédé de fabrication de ce matériau.

Si les masses poreuses connues sont globalement satisfaisantes sur le plan de leur résistance mécanique, il n'en demeure pas moins que les propriétés de soutirage des gaz piégés dans ces masses poreuses sont à ce jour insuffisantes.

En effet, selon les conditions opératoires (température d'utilisation, débit de travail, quantité de gaz contenu dans la bouteille...), elles ne permettent pas toujours de soutirer le gaz qu'elles renferment en continu, à un débit élevé, pendant toute la durée nécessaire à certaines applications, notamment de soudage, avec un taux de restitution de gaz maximal, correspondant au rapport de la quantité de gaz utilisable à la quantité de gaz initialement stockée. Or, il serait souhaitable de pouvoir satisfaire à un débit de 200 1/h en continu pendant 15 mn et à un débit de pointe de 400 1/h pendant 4 mn, pour un taux de contenance en gaz supérieur ou égal à 50% au démarrage de l'essai (défini comme le rapport de la quantité de gaz présente à cet instant à la quantité de gaz initialement chargée dans le récipient), le récipient ayant un rapport diamètre/longueur compris entre 0,2 et 0,7, de préférence entre 0,35 et 0,5, pour une capacité en eau minimale de un litre et de préférence comprise entre 3 et 10 litres.

Cette insuffisance est notamment liée à la déperdition thermique associée à l'extraction du gaz hors du solvant qui peut s'avérer très préjudiciable au soutirage du gaz. Dans le cas d'une bouteille d'acétylène, par exemple, la consommation énergétique est de l'ordre de 600 Joules par gramme d'acétylène extrait du solvant. En pratique, il en résulte un refroidissement important de la bouteille au cours du soutirage, entraînant une plus grande solubilisation de l'acétylène dans le solvant et ainsi une baisse de pression se répercutant sur le débit de soutirage. Le débit finit par s'épuiser lorsque la pression en sortie de bouteille passe en deçà de la pression atmosphérique.

La phénomène mentionné précédemment est particulièrement accentué dans certaines conditions de basse température, par exemple en hiver ou dans des régions au climat froid, de débit de travail important, de longue durée de soutirage (la température finale de la bouteille pouvant être de 40°C inférieure à sa température initiale lors d'un soutirage prolongé), de volume de récipient et de quantité de gaz stockée.

En outre, les variations de température et de pression ne sont pas homogènes au sein du récipient, ce qui peut conduire à l'apparition de contraintes mécaniques susceptibles de dégrader la masse poreuse au cours du temps.

Aux difficultés de soutirage s'ajoutent donc des problèmes de résistance mécanique susceptibles d'avoir des répercussions sur la sécurité.

La présente invention permet de surmonter ces inconvénients de l'art antérieur en utilisant une structure poreuse spécifique (volume poreux, forme et distribution en taille des pores, tortuosité, homogénéité) et des liaisons ou ponts entre cristallites qui peuvent être obtenues grâce à la maîtrise des différentes étapes du procédé, allant de la matière première jusqu'à la cuisson finale en passant par le mélange chaux/silice et la synthèse hydrothermale, conduisant à des cristallites définies ci-dessous.

Autrement dit, la Demanderesse a maintenant montré que ces problèmes et inconvénients pouvaient être surmontés en utilisant une structure de garnissage de récipients se présentant sous la forme de cristallites ayant une morphologie et une taille particulières. Elle a également mis au point le procédé permettant l'obtention de ces cristallites.

La présente invention a ainsi pour objet une structure poreuse de garnissage de récipient, caractérisée en ce qu'elle comprend un matériau de structure cristalline xonotlite et/ou tobermorite et/ou foshagite cristallisé sous la forme d'aiguilles (ou grains aciculaires) dont au moins 50% en volume ont une longueur allant de 2 à 10 µm et une épaisseur allant de 0,2 à 1 µm.

Ces aiguilles ont de préférence une longueur allant de 2 à 5 µm et/ou une épaisseur allant de 0,2 à 0,5 µm. Elle seront désignées dans la suite de cette description par "aiguilles épaisses".

La fraction d'aiguilles restante, qui représente moins de 50% en volume du matériau, est de préférence constituée d'aiguilles ayant une longueur allant de 0,5 à moins de 2 µm et une épaisseur allant de 0,01 à moins de 0,2 µm. Ces aiguilles seront désignées dans la suite de cette description par "aiguilles fines".

De préférence, la structure de garnissage selon l'invention comprend au moins 70% en poids, et plus préférentiellement au moins 80% en poids, voire au moins 90% en poids, de matériau de structure cristalline xonotlite et/ou tobermorite et/ou foshagite.

Comme cela ressort de la partie expérimentale de cette demande, le recours à une structure de garnissage cristallisée sous la forme d'un empilement d'aiguilles enchevêtrées les unes aux autres, telles que définies ci-dessus, et liées entre elles physiquement par des "ponts solides", permet à la structure de présenter les qualités requises pour stabiliser le solvant dans lequel est dissout le gaz et limiter sa décomposition en le confinant dans une infinité d'espaces microscopiques, assurant ainsi la sécurité des récipients et leur conformité réglementaire aux tests normatifs, tels que la norme ISO 3807-1.

Surtout, les espaces microscopiques ou pores ménagés entre les cristallites ont une configuration, c'est-à-dire une forme, facilitant l'introduction du fluide dans le récipient (et donc le remplissage du récipient dans l'unité de conditionnement) et l'extraction du fluide hors du récipient, permettant ainsi d'atteindre le débit de soutirage recherché.

De préférence, ces espaces ménagent entre les aiguilles, qui sont liées les unes aux autres, un diamètre de pore D95 (diamètre auquel 95% en volume des pores ont un diamètre inférieur) supérieur ou égal à 0,4 µm et inférieur à 5 µm. En outre, la structure de garnissage a de préférence un diamètre moyen de pore D50 (diamètre auquel 50% en volume des pores ont un diamètre inférieur) supérieur ou égal à 0,4 µm et inférieur à 1,5 µm. Enfin, elle a avantageusement une porosité ouverte totale comprise entre 80% et 90%. Ces valeurs peuvent toutes être mesurées par porosimétrie au mercure.

Outre le matériau aciculaire décrit précédemment, la structure de garnissage selon l'invention peut comprendre des fibres choisies parmi les fibres synthétiques à base de carbone, telles que décrites notamment dans le document US-A-3,454,362, les fibres de verre alcalino-résistantes, telles que décrites notamment dans le document US-A-4,349,643, les fibres de cellulose partiellement délignifiées, telles que décrites notamment dans le document EP-A-262031, et leurs mélanges, sans que cette liste ne soit limitative. Ces fibres sont utiles notamment en tant que matériaux de renfort, pour améliorer la résistance aux chocs de la structure de garnissage, et permettent également d'éviter les problèmes de fissuration au séchage de la structure. Ces fibres peuvent être utilisées telles quelles ou après traitement de leur surface.

La structure de garnissage peut en outre inclure des agents dispersants et/ou des liants, tels que les dérivés de cellulose, en particulier la carboxyméthylcellulose, l'hydroxypropylcellulose ou l'éthylhydroxyéthylcellulose, des polyéthers, tels que le polyéthylène glycol, des argiles synthétiques de type smectite, de la silice amorphe de surface spécifique avantageusement comprise entre 150 et 300 m²/g, et leurs mélanges, sans que cette liste ne soit limitative.

De préférence, la structure de garnissage contient des fibres, en particulier des fibres de carbone et/ou de verre et/ou de cellulose. La quantité de fibres est avantageusement inférieure à 55% en poids, par rapport à l'ensemble des précurseurs solides mis en oeuvre dans le procédé de fabrication de la structure de garnissage. Elle est de préférence comprise entre 3 et 20% en poids.

La structure de garnissage selon l'invention a de préférence une résistance à la compression supérieure ou égale à 15 kg/cm², soit 1,5 MPa, plus préférentiellement supérieure à 20 kg/m², soit 2 MPa. La résistance mécanique à la compression peut être mesurée par prélèvement d'un cube de 100 x 100 mm² dans la structure de garnissage et application sur la face supérieure de celui-ci d'une force en pression tandis qu'elle est maintenue contre une plaque métallique horizontale. Cette force correspond à la pression (en kg/cm² ou MPa) à partir de laquelle la matière commence à se fissurer.

Dans ce contexte, et pour atteindre la structure poreuse spécifique décrite auparavant, la présente invention a pour objet un procédé de fabrication de la structure de garnissage conduisant à la cristallisation souhaitée et comprenant les étapes successives consistant :
- à calciner à une température d'au moins 850°C pendant au moins une heure des pavés de calcaire tels qu'au moins 90% en poids ont des dimensions de 1 à 15 mm, ledit calcaire ayant une pureté d'au moins 92% en poids et une porosité ouverte allant de 0 à 25%, pour obtenir des particules de chaux vive,
- à mélanger lesdites particules, en milieu aqueux, à de la silice et éventuellement à d'autres composés, pour obtenir une pâtée,
- à soumettre ladite pâtée à une synthèse hydrothermale à une température allant d'environ 170 à 300°C, de préférence d'au moins 180°C, avantageusement d'au moins 185°C, pour obtenir une masse céramique, et
- à sécher ladite masse céramique à une température de 300 à 450°C pendant une durée de 40 à 200 heures.

Il est bien entendu que ce procédé peut comprendre d'autres étapes que celles mentionnées ci-dessus, qui peuvent être des étapes préliminaires, intermédiaires ou supplémentaires à celles-ci.

Le procédé selon l'invention met en oeuvre, dans sa première étape, des pavés de calcaire de 0.1 à 15 mm et de préférence de 1 à 12 mm. Les granulats d'une telle dimension sont généralement obtenus par différentes étapes de concassage des cailloux extraits de carrière, dans un concasseur à mâchoires à écartement réglable, et de criblage des morceaux de pierre sur des tamis pour obtenir les granulats aux dimensions souhaitées. Il a été déterminé que ces valeurs leur permettaient d'être calcinés à coeur dans des conditions relativement simples et d'obtenir, après calcination, une granulométrie de la chaux allant de 0,1 à 15 mm, garantissant à celle-ci une bonne réactivité dans la mise en oeuvre de la seconde étape du procédé (mesurée conformément à la norme NF EN 459-2), sans risque excessif d'hydratation et/ou carbonatation qui pourrait résulter du mode de stockage de la chaux après calcination et qui, *in fine,* pourrait affecter la qualité de la structure de garnissage. Ces pavés peuvent être obtenus par concassage de blocs de calcaire de plus grandes dimensions. Ils ont une pureté (teneur en CaCO₃ par rapport au poids total de calcaire) d'au moins 92% en poids et de préférence d'au moins 95% en poids, voire d'au moins 97% en poids, qui limite la présence d'impuretés susceptibles d'affecter la synthèse hydrothermale du matériau cristallisé en aiguilles. Le calcaire utilisé selon le procédé de l'invention renferme ainsi de préférence moins de 6% en poids de carbonate de magnésium et de silice et moins de 1% en poids d'alumine, d'oxyde de fer, d'oxyde de manganèse, d'autres oxydes, notamment de potassium, sodium, titane et d'impuretés telles que le soufre ou le phosphore. Enfin, la porosité ouverte du calcaire va de 0 à 25% et est de préférence comprise entre 5 et 25%, déterminée par porosimétrie au mercure, de façon à permettre à la fois à l'eau d'imprégner correctement la chaux qui sera formée (en vue de l'éteindre) et au dioxyde de carbone de s'échapper lors de la formation de la chaux par calcination du calcaire.

L'homme du métier saura identifier les carrières ou veines exploitées permettant l'obtention des pavés de calcaire précités.

Les conditions de température, de durée et d'atmosphère mises en oeuvre dans cette étape permettent en outre de calciner totalement le calcaire sans induire de frittage (densification) des particules élémentaires qui aurait pour effet de fermer la porosité et donc de réduire la réactivité de la chaux obtenue. Il a notamment été observé que pour un temps de palier fixé à deux heures, la température ne devait pas être inférieure à 800°C ni supérieure à 1100°C. En outre, dans le cas où la température de calcination est fixée à 1100°C, le temps de palier ne devra pas être substantiellement supérieur à une heure. On comprend donc que l'homme du métier pourra ajuster la température et la durée de cuisson du calcaire dans une certaine mesure, pour autant que la température soit supérieure à 850°C pendant au moins une heure. Un ajustement pourra en effet être rendu nécessaire en fonction du type particulier de four, de la quantité de calcaire traitée et de la disposition (telle que l'épaisseur de couches) du produit dans le four. Une température d'environ 900°C pendant environ trois heures est préférée. A cette température, en effet, il a été observé que la cinétique de frittage était relativement lente et que le temps de palier n'avait qu'un faible impact sur la réactivité. La cuisson à cette température permet donc d'ajuster la durée de calcination aux contraintes industrielles.

La première étape du procédé selon l'invention permet ainsi d'obtenir une chaux vive ayant une réactivité satisfaisante et apte à former, après synthèse hydrothermale, le matériau aciculaire recherché. De préférence, la chaux vive obtenue présente une teneur totale en eau et dioxyde de carbone inférieure à 2% en poids.

Dans la seconde étape du procédé selon l'invention, la chaux vive obtenue à l'issue de la première étape est mélangée à de la silice. Celle-ci peut être amorphe ou cristalline et est de préférence telle que sa pureté est d'au moins 90% (teneur en poids de SiO₂) et qu'elle renferme au moins 90% en poids de particules élémentaires inférieures à 1 µm, de façon à ce que sa réactivité avec la chaux soit la plus grande possible. Des silices de ce type sont couramment disponibles dans le commerce.

La chaux et la silice sont de préférence mélangées l'une à l'autre dans un rapport molaire CaO:SiO₂ de 0,8 à 1. En outre, le ratio eau/précurseurs solides (chaux + silice) est de préférence compris entre 2 et 60, plus préférentiellement entre 3 et 25.

Il peut en outre être utile d'ajouter un dispersant au mélange pour améliorer son homogénéité. Un lubrifiant tel qu'un polyoxyéthylène peut également être prévu.

La troisième étape du procédé selon l'invention consiste à soumettre le mélange issu de la seconde étape (ou "pâtée") à une synthèse hydrothermale à une température comprise entre 170 et 300°C environ, préférentiellement entre 180 à 190 et 250°C, pendant une durée allant, selon le volume du récipient à garnir, de 10h à 70h, par exemple voisine de 40 heures pour un récipient de volume en eau égal à 6 litres. Selon une première forme d'exécution, la synthèse peut être réalisée en introduisant la pâtée dans le récipient ouvert qu'elle est destinée à garnir, puis en plaçant celui-ci dans un four autoclave soumis à une pression comprise entre 5.10⁵ Pa et 25.10⁵ Pa (5 et 25 bars), préférentiellement entre 7.10⁵ Pa et 15.10⁵ Pa (7 et 15 bars). Selon une deuxième forme d'exécution, la synthèse hydrothermale peut être réalisée en plaçant la pâtée dans le récipient qu'elle est destinée à garnir, en fermant celui-ci avec un bouchon équipé d'un système de régulation de pression (tel qu'une valve), en pressurisant le récipient à une pression allant de la pression atmosphérique à 25.10⁵ Pa (25 bars), de préférence entre 7.10⁵ Pa et 15.10⁵ Pa (7 et 15 bars), puis en plaçant ce récipient dans un four non pressurisé. La pression ne dépend pas du type de récipient utilisé mais dépend de la température à laquelle s'effectue la synthèse, par exemple environ 14 bar à 196°C, 9 bar à 170°C, 34 bar à 240°C... En fixant la température, on connaît donc d'avance la pression qu'on obtiendra.

La quatrième étape du procédé ou étape de séchage a pour fonction non seulement d'évacuer l'eau résiduelle, mais aussi de conférer à la masse traitée une structure majoritairement cristalline. Cette opération est réalisée dans un four traditionnel électrique (le même ou non que celui utilisé pour l'opération de synthèse hydrothermale), à la pression atmosphérique, c'est-à-dire après que les bouchons et valves aient été retirés du sommet des récipients après synthèse hydrothermale dans le second exemple de synthèse hydrothermale décrit auparavant.

L'invention a également pour objet un récipient renfermant une structure de garnissage telle que décrite précédemment, lequel récipient est apte à contenir et distribuer un fluide.

Le récipient comprend habituellement une enveloppe métallique renfermant la structure de garnissage décrite précédemment. L'enveloppe métallique peut être constituée d'un matériau métallique tel que l'acier, par exemple un acier à carbone normalisé P265NB selon la norme NF EN10120, dont l'épaisseur le rend apte à résister au moins à la pression de synthèse hydrothermale sans risque d'accident et apte à résister à une pression d'épreuve de 60 bar (6 MPa), valeur normative réglementaire pour le conditionnement de l'acétylène dans les conditions décrites précédemment. Le récipient est en outre habituellement de forme cylindrique et généralement pourvu de moyens de fermeture et d'un régulateur de pression. Ce récipient a de préférence un rapport diamètre / longueur compris entre 0,2 et 0,7, plus préférentiellement entre 0,35 et 0,5, et une capacité en eau minimale d'un litre. Habituellement, un tel récipient aura la forme d'une bouteille.

Les fluides stockés dans la structure de garnissage selon l'invention peuvent être des gaz ou des liquides.

Comme gaz, on peut citer les gaz comprimés purs ou en mélanges sous forme gazeuse ou liquide, tels que l'hydrogène, les hydrocarbures gazeux (alcanes, alcynes, alcènes), l'azote et l'acétylène, et les gaz dissous dans un solvant tels que l'acétylène et les mélanges acétylène-éthylène ou acétylène-éthylène-propylène, dissous dans un solvant tel que l'acétone ou le diméthylformamide (DMF).

Comme liquides, on peut notamment citer les précurseurs organométalliques tels que les précurseurs de Ga et In, utilisés en particulier dans l'électronique, ainsi que la nitroglycérine.

En particulier, le récipient selon l'invention contient de l'acétylène dissous dans du DMF ou de l'acétone.

L'invention sera maintenant décrite plus en détail par référence aux exemples suivants, qui sont donnés à titre purement illustratif et nullement limitatif, et aux Figures annexées, dans lesquelles :
- la Figure 1 illustre l'aspect aciculaire de la structure de garnissage selon l'invention ;
- les Figures 2A à 2C illustrent, à des grandissements différents, l'aspect d'une structure de garnissage selon l'état de la technique ; et
- les Figures 3A à 3C illustrent, aux mêmes grandissements, l'aspect d'une structure de garnissage selon l'invention.

### EXEMPLES

### Exemple 1 : préparation d'une structure de garnissage selon l'invention

### 1A. Calcination du calcaire

Un calcaire ayant les caractéristiques suivantes a été utilisé :
Composition (en poids) : 97,50% CaCO₃, 1,00 % MgC0₃, 0,8% SiO₂, 0,16% Al₂O₃, 0, 5% Fe₂O₃
Granulométrie : 5 à 10 mm
Porosité : 18,9%
D50 : 0,93 µm

Environ 40 kg de ce calcaire ont été étalés sur quatre soles supportant chacune 10 kg de ce produit, sur une épaisseur de 3 cm, puis calcinés dans un four électrique sous atmosphère d'air sec, réglé à une vitesse de montée en température de 5°C/min jusqu'à 900°C puis maintenu 5h à cette température. La ventilation a été activée pendant la montée en température et le palier, puis coupée au refroidissement, qui était de type non forcé.

### 1B. Préparation de la pâtée

La chaux vive obtenue à l'étape 1A a été éteinte à l'aide d'eau chaude (43°C), puis mélangée dans l'eau à divers adjuvants, pour obtenir la pâtée ayant la composition indiquée dans le Tableau 1 ci-dessous.

**Tableau 1**

| Composition de la pâtée | |
|---|---|
| Constituant | Quantité |
| CaO | 172 g |
| Eau à 43°C | 800 g |
| Eau à 20°C | 458 g |
| Acide phosphorique | 4 g |
| Poly(oxyéthylène) | 0,018 g |
| Silice micronique | 180 g |
| Fibres de verre | 24,6 g |

### 1C. Synthèse hydrothermale et séchage

La pâtée obtenue à l'étape 1B a été injectée dans des bouteilles non pressurisées en acier ayant une capacité en eau de 5,8 litres, une hauteur totale de 485 mm, un diamètre extérieur de 140 mm et un diamètre intérieur de 136 mm, en veillant à ce que d'éventuelles bulles au sein de la pâtée soient évacuées hors des récipients pendant et après le remplissage. Les bouteilles ont été mises sous vide primaire lors du remplissage. Une fois remplies, les bouteilles ont été fermées à l'aide de valves dont l'ouverture était tarée à 1,4 MPa, puis placées dans un four où elles ont été chauffées à une température de consigne de 196°C pendant 50 h, sous une pression moyenne de 14 bars (1,4 Mpa) sur la durée de la synthèse hydrothermale.

Les bouteilles ont ensuite été séchées dans un second four après avoir ôté les bouchons et valves, à une température de consigne de 370°C et à pression atmosphérique pendant 100 h.

Il a été vérifié que les bouteilles garnies ainsi obtenues satisfaisaient aux exigences normatives et réglementaires d'usage et de sécurité, selon les tests d'agrément habituellement pratiqués (porosité à l'acétone, essai à température élevée et test de retour de flamme selon la norme ISO 3901-1:2000).

### Exemple 2 : test de résistance mécanique

Les bouteilles produites à l'Exemple 1 ont été découpées transversalement. Il n'a été observé aucune fissure ou craquelure de la structure de garnissage.

Cette dernière a alors été soumise à un test de résistance à la compression. Pour ce faire, un cube de 100 x 100 mm² a été prélevé dans la structure de garnissage et il a été appliqué sur la face supérieure de celui-ci une force tandis qu'elle était maintenue contre une plaque métallique horizontale. La force correspondant à la pression (en kg/cm² ou MPa) à partir de laquelle la matière commençait à se fissurer a été enregistrée. Cette valeur, qui était de 27 kg/cm² (2,7 MPa) correspond à la résistance à la compression du matériau, qui est conforme aux exigences de tenue dans le temps (durabilité) et sécurité requises.

### Exemple 3 : caractéristiques structurales de la structure de garnissage

La structure de garnissage prélevée après découpage des bouteilles de l'Exemple 1 a été analysée au microscope électronique à balayage.

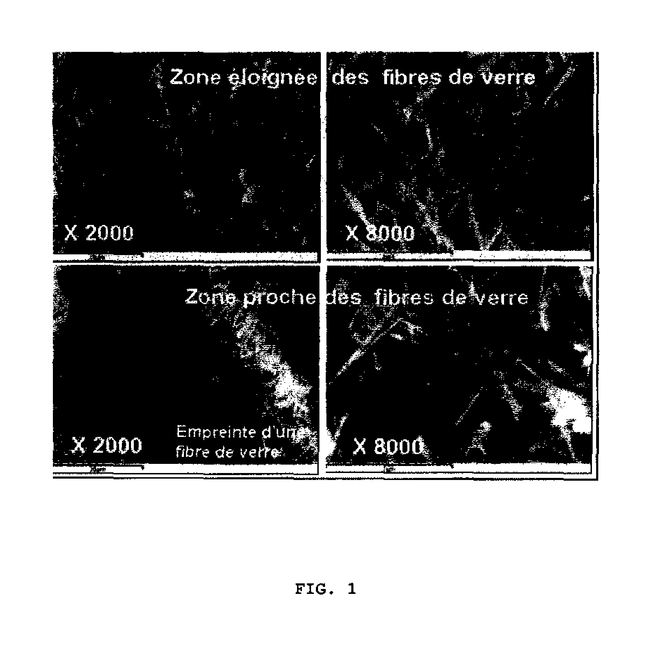

Ces analyses ont montré que la structure présentait une architecture microstructurale constituée d'aiguilles ayant une longueur de 3 à 6 µm et une épaisseur de 0,2 à 0,6 µm. Ces aiguilles sont illustrées à la Figure 1.

Cette structure avait une porosité, mesurée au porosimètre à mercure, de 85-88% en volume, avec une répartition monomodale de tailles de pores (D50 = 0,55 µm).

### Exemple 4 : test de soutirage

Les bouteilles fabriquées comme décrit à l'Exemple 1 ont été remplies d'acétone puis d'acétylène selon un taux de chargement de 0,524, c'est-à-dire à raison de 0,888 kg de gaz au total (incluant la quantité de gaz de saturation dans le solvant, plus la quantité de gaz utile) et 1,694 kg de solvant.

Des tests de débit ont ensuite été réalisés, en soutirant le gaz et en le régulant à un débit continu de 400 1/h à une température ambiante de 18°C. Ces tests ont montré que ce débit pouvait être maintenu pendant 45 mn, ce qui correspondait à un taux de restitution de gaz de plus de 37%. La température extérieure finale de la bouteille était de 11°C, mesuré sur sa paroi externe au moyen d'un thermocouple.

En outre, il n'a pas été observé de crachement de solvant.

### Exemple 5 : comparaison entre différentes structures de garnissage

On a préparé deux bouteilles ayant un volume en eau de 5.8 litres comme décrit à l'Exemple 1, à partir d'une pâtée comprenant 86 kg de chaux vive ; 90,1 kg de silice ; 630 kg d'eau et 12,4 kg de fibres de verre, soumise à une synthèse hydrothermale à 160°C (bouteille A) ou 196°C (bouteille B) pendant 50 h sous une pression moyenne de 14 bars sur la durée de la synthèse hydrothermale, puis à un séchage à 350°C (bouteille A) ou à 370°C (bouteille B) pendant 100 h.

Les bouteilles étaient garnies par la même quantité d'une même pâtée et se différenciaient uniquement par les températures de synthèse hydrothermale et de séchage. Les masses poreuses obtenues avaient le même volume poreux total (83-84%).

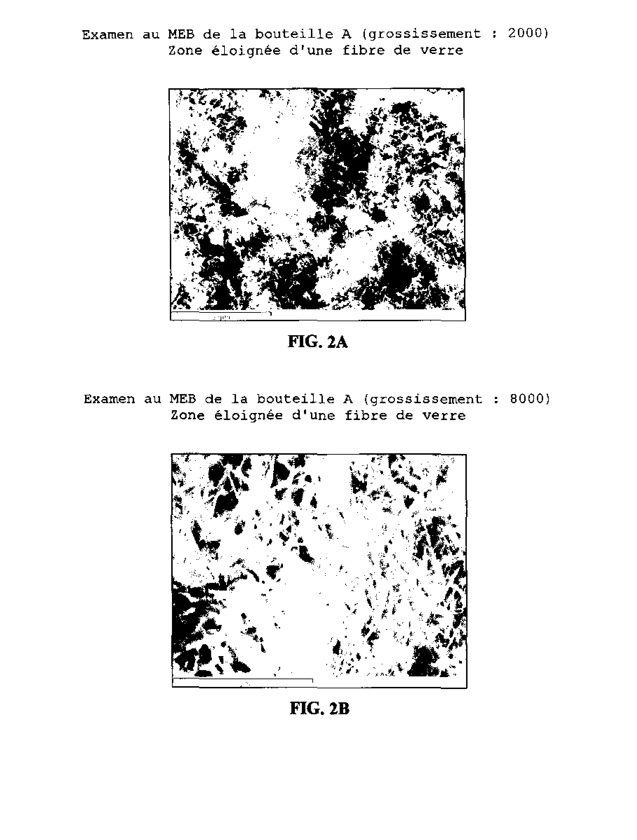

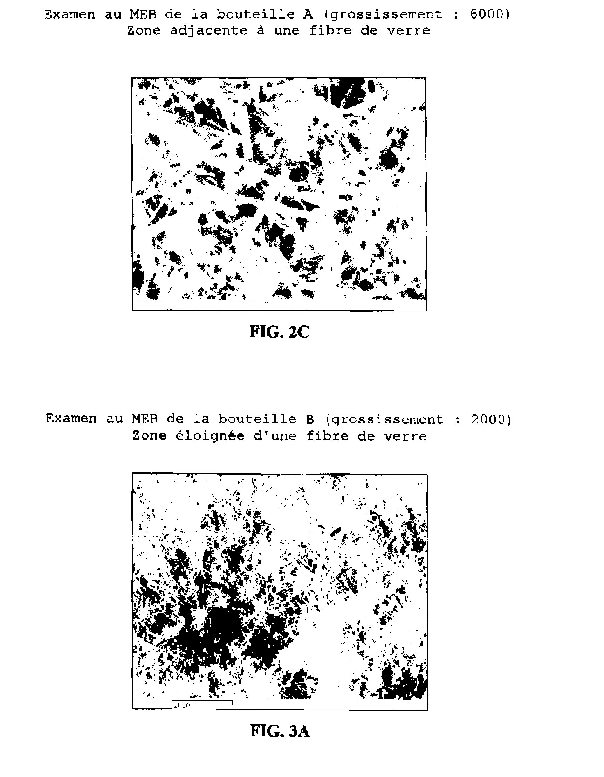

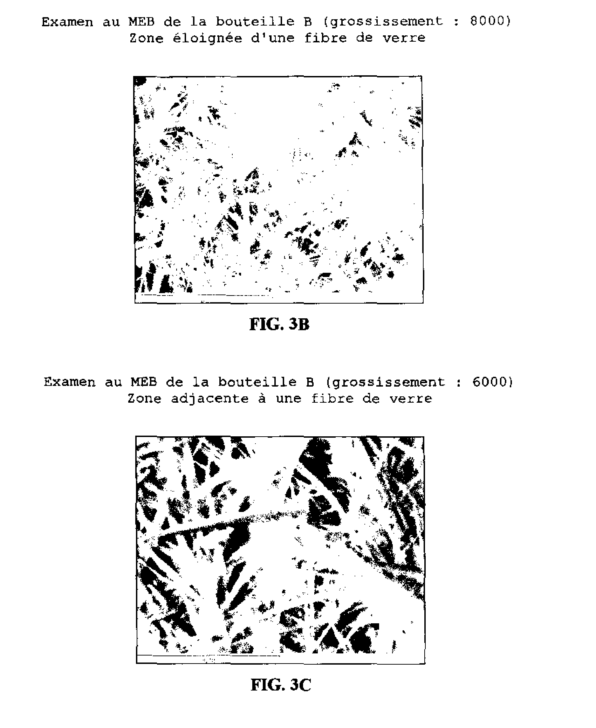

La structure de garnissage de la bouteille A, observée au microscope électronique à balayage, était telle qu'illustrée aux Figures 2A à 2C, tandis que celle de la bouteille B était telle qu'illustré aux Figures 3A à 3C. Elles se présentaient sous la forme d'aiguilles ayant les dimensions indiquées dans le Tableau 2 ci-dessous.

**Tableau 2**

| Dimensions des aiguilles dans les structures de garnissage | | | | | | |
|---|---|---|---|---|---|---|
| Dimensions des cristallites éloignées des fibres de verre : | | | | | | |
| | Bouteille A | | | Bouteille B | | |
| | Diamètre | Longueur | Proportion | Diamètre | Longueur | Proportion |
| Aiguilles « fines » | 0.1µm | 1µm | ∼70% | 0.1µm | 1.5µm | -30% |
| Aiguilles « épaisses » | 0.2µm | 1.5µm | ∼30% | 0.3µm | 4.5µm | -70% |

De ce tableau, il ressort que la structure de garnissage des bouteilles A présentait une microstructure globalement plus fine que celle de la bouteille B, avec des aiguilles globalement plus courtes et moins épaisses.

Les bouteilles A et B ont ensuite été remplies d'acétylène dissous dans le même solvant et on a comparé les performances de débit des deux bouteilles, en soutirant 400 1/h de gaz dissous à différentes températures. Les résultats de ces tests sont présentés dans le Tableau 3 ci-dessous.

**Tableau 3**

| Tests de soutirage | | | | | |
|---|---|---|---|---|---|
| Type de bouteille | Temps de maintien du débit | | | | |
| | Pour 100 % de gaz contenu | | Pour 50% de gaz contenu | | Pour 38% de gaz contenu |
| | A 20°C | A 5°C | A 20°C | A 5°C | A 20°C |
| A | 19 min | 13 min | 9 min | 4 min | 6, 5 min |
| B | 54 min | 38 min | 25 min | 13 min | 19 min |

De ce tableau, il ressort que le débit de soutirage du gaz à partir de la bouteille A s'épuisait plus vite qu'à partir de la bouteille B, dans chaque condition testée. En outre, le taux de restitution à 20°C (% de gaz restitué pour 100% de gaz stocké au démarrage) n'était que de 15% pour la bouteille A, alors qu'il atteignait 45% pour la bouteille B. Ces meilleures performances de la bouteille B selon l'invention sont liées à aux caractéristiques de la porosité définies par la morphologie particulière, la taille et l'arrangement des aiguilles de xonotlite/tobermorite constituant sa garniture, favorables au passage du gaz.

## Revendications

1. Structure de garnissage de récipient, **caractérisée en ce qu'**elle comprend un matériau de structure cristalline xonotlite et/ou tobermorite et/ou foshagite cristallisé sous la forme d'aiguilles dont au moins 50% en volume ont une longueur allant de 2 à 10 µm et une épaisseur allant de 0,2 à 1 µm, lesdites aiguilles étant liées les unes aux autres de façon à ménager entre elles un diamètre de pore D95 supérieur ou égal à 0,4 µm et inférieur à 5 µm et un diamètre moyen de pore D50 supérieur ou égal à 0,4 µm et inférieur à 1,5 µm.

2. Structure de garnissage selon la revendication 1 ou 2, **caractérisée en ce que** lesdites aiguilles ont une longueur allant de 2 à 5 µm.

3. Structure de garnissage selon l'une quelconque des revendications 1 à 2, **caractérisée en ce que** lesdites aiguilles ont un épaisseur allant de 0,2 à 0,5 µm.

4. Structure de garnissage selon l'une quelconque des revendications 1 à 3, **caractérisée en ce qu'**elle renferme en outre des aiguilles ayant une longueur allant de 0,5 à moins de 2µm et une épaisseur allant de 0,01 à moins de 0,2 µm.

5. Structure de garnissage selon l'une quelconque des revendications 1 à 4, **caractérisée en ce qu'**elle comprend au moins 70% en poids, et plus préférentiellement au moins 80% en poids, voire au moins 90% en poids, de xonotlite et/ou tobermorite et/ou foshagite.

6. Structure de garnissage selon l'une quelconque des revendications 1 à 5, **caractérisée en ce qu'**elle renferme en outre des fibres de carbone et/ou de verre et/ou de cellulose.

7. Procédé de fabrication d'une structure de garnissage selon l'une quelconque des revendications 1 à 6, **caractérisé en ce qu'**il comprend les étapes successives suivantes :
• à calciner à une température d'au moins 850°C pendant au moins une heure des pavés de calcaire tels qu'au moins 90% en poids ont des dimensions de 0.1 à 15 mm, ledit calcaire ayant une pureté d'au moins 92% en poids et une porosité ouverte allant de 0 à 25%, pour obtenir des particules de chaux vive,
• à mélanger lesdites particules, en milieu aqueux, à de la silice et éventuellement à d'autres composés, pour obtenir une pâtée,
• à soumettre ladite pâtée à une synthèse hydrothermale à une température allant de 170 à 300°C, pour obtenir une masse céramique, et
• à sécher ladite masse céramique à une température de 300 à 450°C pendant une durée de 40 à 200 heures.

8. Procédé selon revendication 7, **caractérisé en ce qu'**au moins 90% en poids desdits paves de calcaire ont une dimension de 1 à 12 mm.

9. Procédé selon la revendication 7 ou 8, **caractérisé en ce que** ledit calcaire a une pureté d'au moins 95% en poids, voire d'au moins 97% en poids.

10. Procédé selon l'une quelconque des revendications 7 à 9, **caractérisé en ce que** ledit calcaire a une porosité ouverte comprise entre 5 et 25%.

11. Procédé selon l'une quelconque des revendications 7 à 10, **caractérisé en ce que** la synthèse hydrothermale est effectuée à une température comprise entre 180 et 250°C.

12. Récipient renfermant une structure de garnissage telle que définie dans l'une quelconque des revendications 1 à 6, lequel récipient a la forme d'une bouteille apte à contenir et distribuer un fluide.

13. Récipient selon la revendications 12, **caractérisé en ce qu'**il contient de l'acétylène dissous dans un solvant, en particulier du DMF ou de l'acétone.

14. Utilisation d'un récipient selon la revendication 12 ou 13, ou d'une structure de garnissage selon l'une des revendications 1 à 6 pour stocker de l'acétylène.

## Patentansprüche

1. Auskleidestruktur für einen Behälter, **dadurch gekennzeichnet, dass** sie einen Werkstoff mit einer kristallinen Xonotlit- und/ oder Tobermorit- und/ oder kristallisierten Foshagit-Struktur in Form von Nadeln umfasst, von denen zumindest 50 Volumen-% eine Länge zwischen 2 und 10 µm und eine Dicke zwischen 0,2 und 1 µm aufweisen, wobei die besagten Nadeln derart miteinander verbunden sind, um zwischen sich einen Porendurchmesser D95 größer oder gleich 0,4 µm und kleiner als 5 µm und einen durchschnittlichen Porendurchmesser D50 größer oder gleich 0,4 µm und kleiner als 1,5 µm aufzuweisen.

2. Auskleidestruktur nach Anspruch 1 oder 2, **dadurch gekennzeichnet, dass** die besagten Nadeln eine Länge zwischen 2 und 5 µm aufweisen.

3. Auskleidestruktur nach irgendeinem der Ansprüche 1 bis 2, **dadurch gekennzeichnet, dass** die besagten Nadeln eine Dicke zwischen 0,2 und 0,5 µm aufweisen.

4. Auskleidestruktur nach irgendeinem der Ansprüche 1 bis 3, **dadurch gekennzeichnet, dass** sie darüber hinaus Nadeln einschließt, die eine Länge zwischen 0,5 und unter 2 µm und eine Dicke zwischen 0,01 und unter 0,2 µm aufweisen.

5. Auskleidestruktur nach irgendeinem der Ansprüche 1 bis 4, **dadurch gekennzeichnet, dass** sie zumindest 70 Gewichts-%, und vorzugsweise zumindest 80 Gewichts-%, oder gar zumindest 90 Gewichts-% an Xonotlit und/ oder Tobermorit und/ oder Foshagit umfasst.

6. Auskleidestruktur nach irgendeinem der Ansprüche 1 bis 5, **dadurch gekennzeichnet, dass** sie darüber hinaus Fasern aus Kohlenstoff und/ oder Glas und/ oder Zellulose einschließt.

7. Verfahren zum Herstellen einer Auskleidestruktur nach irgendeinem der Ansprüche 1 bis 6, **dadurch gekennzeichnet, dass** es die folgenden aufeinanderfolgenden Schritte umfasst:
- Kalzinieren der Kalksteinpflaster zumindest eine Stunde lang auf einer Temperatur von zumindest 850°C, von denen zumindest 90 Gewichts-% eine Abmessung von 0,1 bis 15 mm aufweisen, wobei der besagte Kalkstein eine Reinheit von zumindest 92 Gewichts-% und eine offene Porosität von 0 bis 25% aufweist, um Partikel aus ungelöschtem Kalk zu erhalten,
- Vermischen der besagten Partikel im wässrigen Medium mit Silicium und eventuell anderen Verbindungen, um einen Brei zu erhalten,
- Unterwerfen des besagten Breis einer Hydrothermalsynthese bei einer Temperatur zwischen 170 und 300°C, um eine Keramikmasse zu erhalten, und
- Trocknen der besagten Keramikmasse bei einer Temperatur zwischen 300 und 450°C für eine Dauer von 40 bis 200 Stunden.

8. Verfahren nach Anspruch 7, **dadurch gekennzeichnet, dass** zumindest 90 Gewichts-% der besagten Kalksteinpflaster eine Abmessung zwischen 1 und 12 mm aufweisen.

9. Verfahren nach Anspruch 7 oder 8, **dadurch gekennzeichnet, dass** der besagte Kalkstein eine Reinheit von zumindest 95 Gewichts-%, oder gar von zumindest 97 Gewichts-% aufweist.

10. Verfahren nach irgendeinem der Ansprüche 7 bis 9, **dadurch gekennzeichnet, dass** der besagte Kalkstein eine offene Porosität zwischen 5 und 25% aufweist.

11. Verfahren nach irgendeinem der Ansprüche 7 bis 10, **dadurch gekennzeichnet, dass** die Hydrothermalsynthese bei einer Temperatur zwischen 180 und 250°C durchgeführt wird.

12. Behälter, der eine Auskleidestruktur nach irgendeinem der Ansprüche 1 bis 6 einschließt, wobei der Behälter die Form einer Flasche aufweist, die in der Lage ist, eine Flüssigkeit zu enthalten und zu verteilen.

13. Behälter nach Anspruch 12, **dadurch gekennzeichnet, dass** er Acetylen enthält, das in einem Lösungsmittel, im Speziellen DMF oder Aceton, aufgelöst ist.

14. Verwendung eines Behälters nach Anspruch 12 oder 13, oder einer Auskleidestruktur nach einem der Ansprüche 1 bis 6 zum Lagern von Acetylen.

## Claims

1. Packing structure for container, **characterised in that** it comprises a crystal structure of xonotlite and/or tobermorite and/or crystallised foshagite in the form of needles of which at least 50% by volume have a length ranging from 2 to 10 µm and a thickness ranging from 0.2 to 1 µm, said needles being linked to one another in such a way as to arrange between them a pore diameter D95 greater than or equal to 0.4 µm and less than 5 µm and an average pore diameter D50 greater than or equal to 0.4 µm and less than 1.5 µm.

2. Packing structure according to claim 1 or 2, **characterised in that** said needles have a length ranging from 2 to 5 µm.

3. Packing structure according to any of claims 1 to 2, **characterised in that** said needles have a thickness ranging from 0.2 to 0.5 µm.

4. Packing structure according to any of claims 1 to 3, **characterised in that** it further encloses needles having a length ranging from 0.5 to less than 2µm and a thickness ranging from 0.01 to less than 0.2 µm.

5. Packing structure according to any of claims 1 to 4, **characterised in that** it comprises at least 70% by weight, and more preferentially at least 80% by weight, or even at least 90% by weight, of xonotlite and/or tobermorite and/or foshagite.

6. Packing structure according to any of claims 1 to 5, **characterised in that** it further encloses fibres of carbon and/or of glass and/or of cellulose.

7. Method for manufacturing a packing structure according to any of claims 1 to 6, **characterised in that** it comprises the following successive steps of:
- calcinating at a temperature of at least 850°C for at least one hour of limestone pavers such that at least 90% by weight have dimensions from 0.1 to 15 mm, said limestone having a purity of at least 92% by weight and an open porosity ranging from 0 to 25%, in order to obtain quick lime particles,
- mixing said particles, in an aqueous medium, with silica and optionally with other compounds, in order to obtain a pump,
- subjecting said pulp to a hydrothermal synthesis at a temperature ranging from 170 to 300°C, in order to obtain a ceramic mass, and
- drying said ceramic mass at a temperature of 300 to 450°C for a period of 40 to 200 hours.

8. Method according to claim 7, **characterised in that** at least 90% by weight of said limestone pavers have a dimension from 1 to 12 mm.

9. Method according to claim 7 or 8, **characterised in that** said limestone has a purity of at least 95% by weight, or even at least 97% by weight.

10. Method according to any of claims 7 to 9, **characterised in that** said limestone has an open porosity between 5 and 25%.

11. Method according to any of claims 7 to 10, **characterised in that** the hydrothermal synthesis is carried out at a temperature between 180 and 250°C.

12. Container enclosing a packing structure such as defined in any of claims 1 to 6, said container has the shape of a bottle able to contain and distribute a fluid.

13. Container according to claims 12, **characterised in that** it contains acetylene dissolved in a solvent, in particular DMF or acetone.

14. Use of a container according to claim 12 or 13, or of a packing structure according to one of claims 1 to 6 for storing acetylene.
